# EUROPEAN PATENT APPLICATION

(11) **EP 2 144 135 A1**
(43) Date of publication of application: **13.01.2010**
(21) Application number: 08252337.4
(22) Date of filing: 09.07.2008
(51) Int. Cl.: G06F 1/16, H04M 1/247, H04M 1/725, G06F 3/033

(54) **Automatic key function switch device for a handheld apparatus by detecting the gravity direction**

(71) Applicant: TOPSEED TECHNOLOGY CORP., Chung Ho City, Taipei Hsien, Taiwan 235 (CN)
(72) Inventor: Chi, Chung-Ping, Chung Ho City Taipei Hsien 235 (TW)
(74) Representative: Cheyne, John Robert Alexander M.

(57) **Abstract**

A switch device disposed in a handheld apparatus having a keypad with double function is capable of automatically switching to one function by means of sensing directionality of the apparatus. The handheld apparatus has a keypad whose some keys bear double function. The switch device in the apparatus has a gravity sensor for detecting a distribution of gravity of the apparatus along three coordinate axes. The senor sends a gravity signal to a controller, which judges a direction of the apparatus being disposed. The controller sends a switching signal to the keypad. The keys with double function are then switched to one function corresponding to the judged direction.

## Description

### THCHNICAL FIELD

This invention relates to handheld electronic apparatuses, and more particularly to handheld apparatuses with double function keys.

### BACKGROUND OF THE INVENTION

With great advance of battery and semiconductor technologies, so many kinds of handheld apparatuses, such as mobile phones, portable multimedia players (PMPs), remote controls, MPS players, personal digital assistants, digital cameras, portable global positioning systems, electronic dictionaries, the SideShow devices used for the VISTA operating system of Microsoft etc., become popular. It is very confused and inconvenient that a user carries or uses various individual handheld apparatuses. Thus, a 2-in-1 integrating approach is adopted by many conventional handheld apparatuses, such as a combination of a SideShow device and a remote control, or a combination of a mobile phone and a PMP. Usually, those 2-in-1 apparatuses arrange keypads of the combined two systems into a single keypad with double function keys. That is to say, a part of or all keys of the keypad have two distinct key functions. For instance, a numeral key division on the right of a standard computer keyboard just has some double function keys. Such a design can reduce the number of keys. However, when a double function key is being operated by a user, (s)he must frequently press an another control key (usually marked "2^{nd} Function" or "shift") to switch key functions. The user must check the key (s)he wants to operate bears now the first or second function before operating that key. A function shift operation must be performed in advance if it is required, so that the key can execute a desired function. It is very inconvenient for users.

Currently, some handheld apparatuses with double function keypad arrangement are designed to be operated in separately vertical or horizontal direction for combined two systems. For example, in a two-in-one apparatus combining a cellular phone and a handheld game console, the cellular phone and the handheld game console are usually operated in vertical and horizontal directions, respectively. However, there is no product, which can automatically switch key function while its body is being turned to different direction, in the market.

### SUMMARY OF THE INVENTION

A primary object of the invention is to provide an automatic key function switch device by sensing direction for a handheld apparatus, which can detect directionality of the handheld apparatus to automatically switch key function corresponding to the direction without any additional operations while a user is turning it. It will be very convenient for users of the apparatuses with double function keypad arrangement.

This invention is for a handheld apparatus having a keypad whose some keys bear double function. In order to accomplish the object abovementioned, the switch device in the apparatus has a gravity sensor for detecting a distribution of gravity of the apparatus along three coordinate axes. The senor sends a gravity signal to a controller, which judges a direction of the apparatus being disposed. The controller sends a switching signal to the keypad. The keys with double function are then switched to one function corresponding to the judged direction.

### DESCRIPTION OF DRAWINGS

FIG.1 illustrates a handheld apparatus having double-sided keypad arrangement in accordance with the principles of the invention;
FIG 2 illustrates a block diagram of an embodiment in accordance with the principles of the invention; and
FIG 3 is a graph indicating a principle of direction judgment according to the invention.

### DETAILED DESCRIPTION OF THE INVENTION

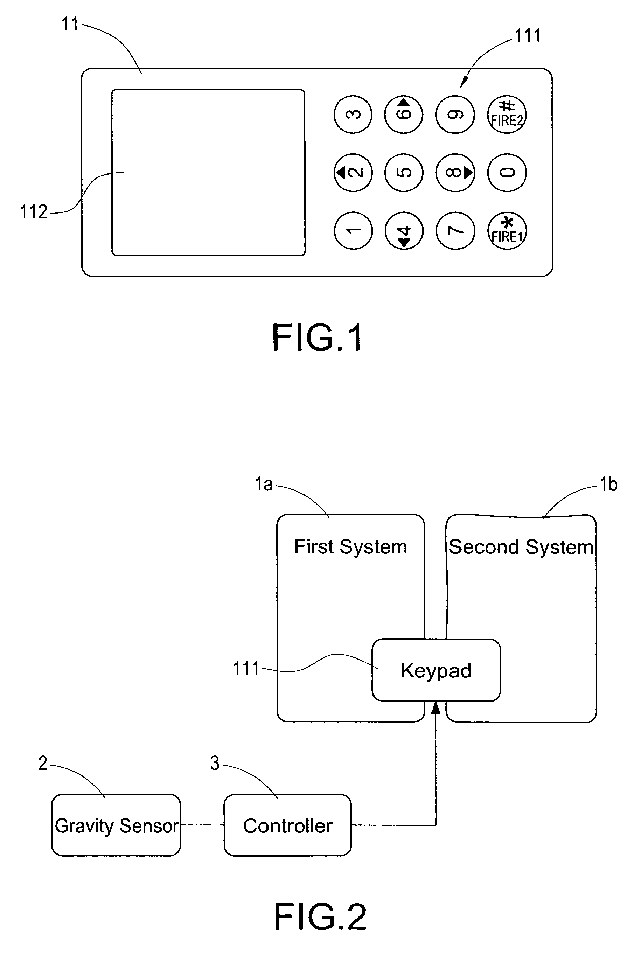

Referring to FIG 1, a handheld apparatus having double function keypad arrangement in accordance with the principles of the invention is shown. The apparatus has a cuboidal housing 1 including a panel 11. A keypad 111 is equipped on the panel 11. Of course, other elements, such as a display 112, also can be additionally equipped on the panel 11. The handheld apparatus shown in FIG 1 is a body combining a cellular phone and a handheld game console as an example, but not limited to this arrangement or combination. The keypad 111 includes elementary numeral keys 0∼9 and symbol keys "*" and "#", wherein the numeral keys "2", "4", "6" and "8" and symbol keys "*" and "#" have a second function for the handheld game console, i.e. the second functions of them are direction control keys and fire keys respectively. Besides, the handheld apparatus is operated in vertical direction when it is a cellular phone, and in horizontal direction when being a game console. Therefore, the marking direction of the second function is different from that of the first function.

Referring to FIG 2, it shows a preferred embodiment according to the invention. There are two independent systems, a first system 1a and a second system 1b, in the housing 1. The keypad 111 is shared by the two systems 1a, 1b. A gravity sensor 2, which can detect a distribution of gravity along three rectangular coordinate axes, is arranged in the housing 1. The gravity sensor 2 electrically connects to a controller 3. The gravity sensor 2 sends a gravity signal reflecting the distribution of gravity along three rectangular coordinate axes to the controller 3. In the embodiment as shown in FIG. 2, an output end of the controller 3 electrically connects to the keypad 111. The controller 3 judges directionality of the housing 1 (i.e. vertical or horizontal) according to the gravity signal from the gravity sensor 2, and then outputs a switching signal to the keypad 111 to switch first/second function which is corresponding to the judged direction. For the embodiment shown in FIG 2, all keys are switched to bear function of numeral and symbol when the housing 1 is held vertically, while the keys "2", "4,", "6", "8", "*" and "#" are switched to bear function of direction control and fire.

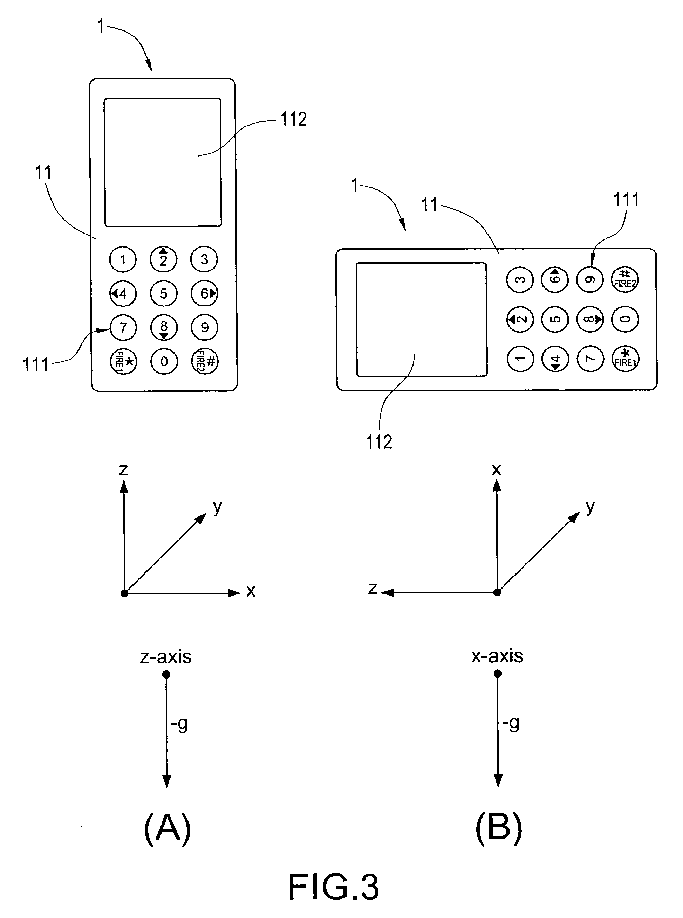

Referring to FIG 3, let's suppose the housing 1 of the handheld apparatus is in a positively vertical position, i.e. its longitudinal axis is parallel to z-axis of a 3 dimensional rectangular coordinate system or its panel 11 is parallel to an x-z plane of the 3 dimensional rectangular coordinate system. At this time a gravity of -g on z-axis will be detected as shown in FIG. 3A. (because the gravity is in an opposite direction of z-axis, it becomes negative.) Contrarily, when the housing 1 is turned on x-z plane with an angle of 90 degrees to be in horizontal position as shown in FIG 3B, x-axis replaces the original position of z-axis and the gravity completely transfers to x-axis. Thus a gravity of -g on x-axis will be detected. The controller 3 can judge that the housing 1 is vertical or horizontal according to the principle, and further switch double function of the keypad to correspond with the directionality. Of course, the abovementioned configuration is suitable for a using mode with the housing 1 being vertical or horizontal. If the present invention is utilized in other special using modes, the problem can be simply solved by turning the coordinate axes or adjusting the judging standard in the controller 3.

The present invention can automatically switch a keypad with double function according to directionality of the housing 1 without manually switching when a user is turning a handheld apparatus. Therefore it is very convenient for users.

## Claims

1. An automatic switch device by sensing direction for a handheld apparatus having a keypad (111) on a housing (1), whose at least one key bears double function, the automatic switch device comprising:
a gravity sensor (2) disposed in the housing (1) for detecting a direction of gravity and outputting a gravity signal; and
a controller (3) disposed in the housing (1), electrically connected to the gravity sensor (2) for receiving the gravity signal, and judging a direction of the housing according to the gravity signal and then outputting a switching signal to the keypad (111);
**characterised in that** the at least one key bearing double function is switched to one function corresponding to the judged direction of the housing (1) under a control of the switching signal from the controller (3).

2. The switch device of claim 1, wherein the gravity sensor (2) detects a distribution of gravity along three dimensional rectangular coordinate axes.
